(19) Europäisches Patentamt
European Patent Office
Office européen des brevets

(11) **EP 1 473 955 B1**

(12) **FASCICULE DE BREVET EUROPEEN**

(45) Date de publication et mention de la délivrance du brevet:
**11.11.2009 Bulletin 2009/46**

(51) Int Cl.:
***H04W 28/16*** *(2009.01)*     *H04W 52/36* *(2009.01)*

(21) Numéro de dépôt: **04291063.8**

(22) Date de dépôt: **23.04.2004**

(54) **Contrôle de charge dans le sens montant pour un système de communication sans fil avec contrôle de puissance**

Belastungssteuerung von Aufwärtsverbindungen in einem drahtlosen Kommunikationssystem mit Hilfe von Leistungsregelung

Uplink load capacity control in a wireless communication system with power control

(84) Etats contractants désignés:
**AT BE BG CH CY CZ DE DK EE ES FI FR GB GR HU IE IT LI LU MC NL PL PT RO SE SI SK TR**

(30) Priorité: **30.04.2003 FR 0305355**

(43) Date de publication de la demande:
**03.11.2004 Bulletin 2004/45**

(73) Titulaire: **INRIA INSTITUT NATIONAL DE RECHERCHE EN INFORMATIQUE ET EN AUTOMATIQUE Rocquencourt F-78153 Le Chesnay (FR)**

(72) Inventeurs:
• **Baccelli, François**
  **92190 Meudon (FR)**
• **Blaszczyszyn, Bartlomiej**
  **92220 Bagneux (FR)**
• **Karray, Mohamed Kadhem**
  **92130 Issy Les Moulineaux (FR)**

(74) Mandataire: **Plaçais, Jean Yves Cabinet Netter, 36, avenue Hoche 75008 Paris (FR)**

(56) Documents cités:
  **WO-A-00/01189**     **WO-A-01/47146**
  **WO-A-01/65772**

• **KNUTSSON J ET AL: "Downlink admission control strategies for CDMA systems in a Manhattan environment" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 mai 1998 (1998-05-18), pages 1453-1457, XP010287985 ISBN: 0-7803-4320-4**
• **ANDERSIN M ET AL: "SOFT AND SAFE ADMISSION CONTROL IN CELLULAR NETWORKS" IEEE / ACM TRANSACTIONS ON NETWORKING, IEEE INC. NEW YORK, US, vol. 5, no. 2, 1 avril 1997 (1997-04-01), pages 255-264, XP000692319 ISSN: 1063-6692**

## Description

L'invention concerne les systèmes de communication cellulaire sans fil avec contrôle de puissance, comme UMTS (pour "Universal Mobile Terrestrial System").

Un réseau cellulaire de communications se fonde sur des stations de base, capables de desservir des postes d'utilisateurs "mobiles". Chaque mobile a besoin d'un certain service qui se compose de données à transmettre dans certaines conditions (débit, délai, etc.). Un mobile qui reçoit un tel service est dit "mobile actif".

Ce qu'on appelle le contrôle de charge est une technique pour contrôler le trafic en termes de mobiles arrivants (contrôle d'admission) et le trafic en termes de mobiles courants (contrôle de congestion). Le contrôle de charge peut donc inclure les fonctions suivantes :

- un contrôle d'admission détermine si le système admet un nouveau mobile, ou non,
- un contrôle de congestion examine ce qui se passe pour les mobiles actifs, en fonction des services qu'ils demandent.

Le contrôle de charge tend notamment à garantir la qualité du service (QoS) pour les mobiles en temps réel, aussi bien que pour les mobiles non-temps-réel (débit élastique). La réalisation d'un contrôle de charge efficace est cruciale dans les systèmes sans fil avec contrôle de puissance.

Les techniques de contrôle de charge connues ne donnent pas entière satisfaction, comme on le verra en détail plus loin. Les raisons principales en sont aux plans de l'efficacité, de la rapidité, et de l'aptitude à traiter un nombre élevé de mobiles.

La présente invention vient améliorer la situation.

L'invention concerne un dispositif de contrôle pour réseau de communication sans fil, ayant les caractéristiques définies dans l'une des revendications 1 à 10.

L'invention concerne également un procédé de contrôle pour réseau de communication sans fil tel que défini dans l'une des revendications 11 à 20.

D'autres caracteristiques et avantages de l'invention apparaitront a l'examen de la description detaillee ci-apres, et des dessins annexés, sur lesquels :

- la figure 1 illustre de façon schématique un réseau de communication cellulaire,
- la figure 1A illustre de façon schématique plus détaillée un réseau de communication cellulaire,
- la figure 2 illustre sous forme de diagramme de flux, un premier exemple de mécanisme mettant en oeuvre l'invention,
- la figure 2A illustre une structure informatique susceptible de mettre en oeuvre le premier mécanisme,
- la figure 3 illustre sous forme de diagramme de flux, un second exemple de mécanisme mettant en oeuvre l'invention,
- la figure 4 illustre sous forme de diagramme de flux, l'aspect décentralisé des mécanismes mettant en oeuvre l'invention,
- la figure 5 illustre sous forme de diagramme de flux, une variante du premier exemple de mécanisme mettant en oeuvre l'invention,
- la figure 6 illustre sous forme de diagramme de flux, une variante du second exemple de mécanisme mettant en oeuvre l'invention,
- la figure 7 illustre sous forme de diagramme de flux, un troisième exemple de mécanisme mettant en oeuvre l'invention, et
- la figure 8 illustre sous forme de diagramme de flux, un quatrième exemple de mécanisme mettant en oeuvre l'invention.

La présente description comprend aussi une annexe 1, dans laquelle sont regroupées les formules, précédées d'une définition des notations qu'elles utilisent, et qui peuvent être reprises dans la présente description.

Les dessins et les annexes à la description pourront non seulement servir à compléter l'invention, mais aussi contribuer à sa définition, le cas échéant.

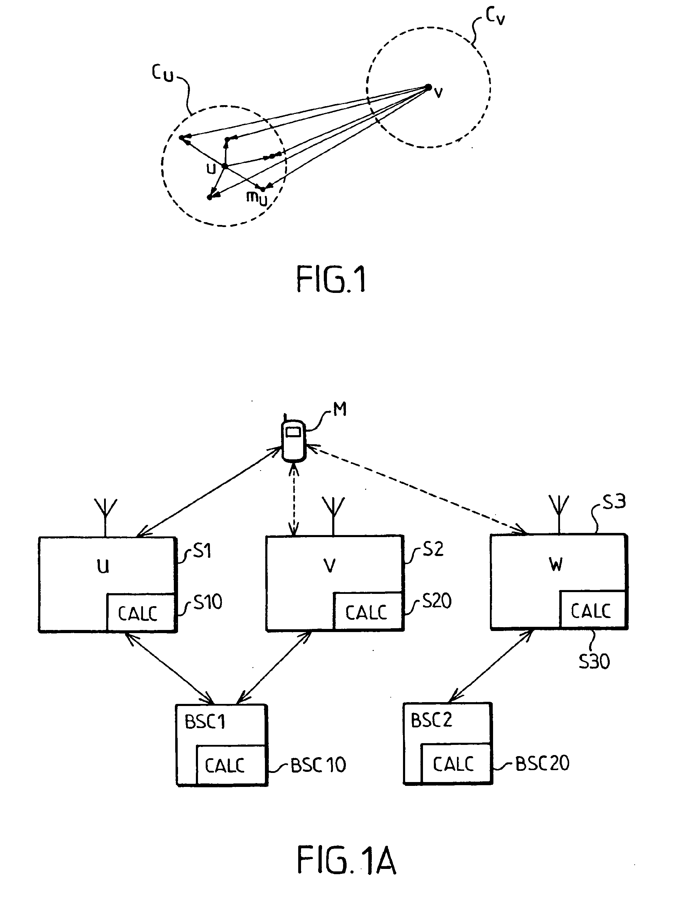

La Figure 1 illustre un exemple de réseau cellulaire avec deux stations notées u et v. Chaque station u, v dessert les mobiles localisés dans une certaine zone géographique appelée cellule, Cu, Cv. Sont ici illustrés 5 mobiles, désignés génériquement par $m_u$, dans la cellule Cu de la station u. En pratique, il existe d'autres mobiles $m_v$, non représentés, dans la cellule Cv de la station v.

Pour simplifier, la figure 1 illustre des cellules par des disques mais elles peuvent avoir n'importe quelle autre forme. Les cellules peuvent avoir une certaine intersection appelée zone de "handover".

Dans la présente description:

- une "station de base", que l'on pourra abréger en "station" ou "antenne", comporte une antenne-réseau, directionnelle ou omnidirectionnelle, et l'ensemble électronique associé à celle-ci.

- les expressions "poste d'utilisateur" ou "équipement d'utilisateur" ou "mobile" ou même "utilisateur" désignent tout appareil capable de communication sans fil, et éventuellement susceptible de mobilité.
- l'expression "sens montant" vise le cas où un mobile cherche à établir ou maintenir une communication avec la station ; l'expression "sens descendant" vise le cas où la station de base cherche à établir ou maintenir une communication vers le mobile.
- un "service" est ce dont a besoin un mobile, essentiellement en termes données à transmettre dans certaines conditions (débit, délai, notamment).
- un mobile "actif" est un mobile qui reçoit un tel service.
- un "service non-temps-réel" ("non-real-time" ou NRT) peut s'accommoder d'un débit assez variable ou "élastique".
- un "service en temps-réel" ("real-time" ou RT) ne peut s'accommoder d'un débit élastique; il nécessite un débit sensiblement prédéfini, ou, du moins, un débit minimum prédéfini.
- l'expression "avec limitation de puissance" vise le cas où les puissances d'émission des mobiles et de la station doivent rester inférieures ou égales à un seuil. Les systèmes réels tels qu'UMTS ont en principe une limitation de puissance;
- l'expression "sans limitation de puissance" vise le cas où les puissances d'émission des mobiles et de la station n'auraient aucune contrainte de seuil maximum à respecter.

À chaque instant, un mobile donné a une position géographique qui lui est propre; il exige un certain service ; il pourrait être desservi par une ou plusieurs stations ; s'il est actif, il est effectivement desservi par une certaine station. Ainsi:

- un ensemble donné de stations et de mobiles est appelé "configuration de mobiles" (et, implicitement, de stations, celles-ci restant fixes).

Le contrôle de charge dans les réseaux cellulaires avec contrôle de puissance vise à s'assurer que, pour les configurations de mobiles rencontrées, il existe une allocation de puissance respectant certaines exigences en termes de rapport-signal-sur-interférence-et-bruit (SINR pour "signal-to-interference-and-noise-ratio") et, le cas échéant, de limitations de puissance.

Ici, l'expression "critère PAP" ou l'acronyme "PAP" seul (tiré de "Principe d'Allocation de Puissance" ou "Power Allocation Principle") désigne un critère utilisé pour déterminer la faisabilité de l'allocation de puissance, en présence d'une configuration donnée de mobiles. On décrira notamment deux critères différents notés UPAP, et EUPAP. La notation xPAP désigne indifféremment de tels critères.

La Demande de brevet français FR 2 851 401, déposée le 19 février 2003 et publiée le 20 août 2004, décrit en profondeur le contexte du contrôle de charge dans un réseau de communication sans fil, en y apportant des solutions nouvelles. Il pourra être fait référence au contenu descriptif de cette demande pour plus de détails.

Bien que certains de ses aspects puissent aussi s'appliquer au sens descendant (notamment comme décrit dans une autre demande de brevet déposée le même jour) la présente description vise principalement le sens montant.

La Figure 1 illustre également un exemple de la configuration des mobiles servis par la station $u$ ($m_u$ indique un mobile servi par la station $u$). La figure illustre les trajets des mobiles à leur station serveuse $u$ d'une part et aux autres stations (telles que $v$) d'autre part.

Les pertes de propagation le long de ces trajets sont appelés affaiblissements. Une station est dite voisine d'un mobile si le mobile peut mesurer l'affaiblissement à cette station.

La figure 1A fait apparaître trois stations de base S1, S2 et S3, munies chacune d'une antenne, et, notamment, d'un module de calcul (S10, S20, S30). Les circuits usuels de télécommunication sans fil ne sont pas représentés, pour simplifier. Un mobile M est à portée des trois stations; il est supposé actif avec la station S1. Dans l'exemple, les stations S1 et S2 sont sous contrôle d'un contrôleur de stations de base BSC1 ;. un autre contrôleur de stations de base BSC2 s'occupe de la station S3, et d'un ou plusieurs autres stations, non représentées. Les contrôleurs ont aussi des capacités de calcul BSC10 et BSC20, et leurs autres fonctions habituelles, non représentées. Les trois stations ont par exemple les portées définies par les cellules de la Figure 1.

L'augmentation du nombre de mobiles peut conduire à une situation où l'allocation des puissances n'admet plus de solution (on dit alors que l'allocation des puissances est infaisable). Dans un tel cas, on dit que le système est dans une situation de congestion.

Le but du contrôle de charge est d'empêcher cela de se produire. Plusieurs procédés ou algorithmes de contrôle de charge ont été proposés dans la littérature.

Les algorithmes dits "directs" reposent sur un "indicateur de charge", qui est choisi pour être calculable, et représenter l'amplitude de la charge du système. L'indicateur de charge le plus généralement utilisé pour le sens montant est dérivé de l'interférence totale (somme du bruit et des puissances de tous les mobiles) reçue à la station. Ceci a été proposé par [1] A.J. Viterbi. "CDMA: Principles of Spread Spectrum Communications", 1995.

Ont également été proposés d'autres indicateurs comprenant notamment le SINR ("Signal to Interference and Noise Ration" ou rapport-signal-sur-interférence-et-bruit), et/ou des grandeurs de débit-bit ("bit rate") $D_{bit}$, ou équivalent.

Le contrôle de charge est alors fondé sur la comparaison de cet indicateur de charge à une valeur-seuil, appelée le seuil de charge, pour le sens montant. Un nouveau mobile ne peut être admis que s'il peut être servi sans faire passer l'indicateur de charge au-delà du seuil dans le sens montant.

Ces algorithmes directs ont les inconvénients suivants:

- les indicateurs de charge utilisés par ces algorithmes dépendent des puissances des mobiles qui fluctuent dans le temps (par exemple en fonction de leurs déplacements). Ceci oblige l'opérateur à prendre une grande marge de sécurité pour le seuil de charge. D'autre part la charge additionnelle induite par un nouvel appel doit être approximativement estimée.
- de plus, les algorithmes directs connus n'assurent pas qu'une allocation de puissance existe. Par conséquent, dans les système réels, des coupures de communication peuvent se produire, y compris aussitôt après l'admission d'un nouveau mobile.
- par ailleurs, les algorithmes directs réalisent des itérations pour essayer de résoudre le problème de contrôle de puissance plusieurs fois, avant d'obtenir une solution faisable (le terme faisable signifie qu'il y a une solution). Cette méthode peut aboutir à éliminer plus de mobiles que cela n'est nécessaire. De plus, les algorithmes directs sont très lents lorsqu'ils doivent traiter à partir de rien une configuration donnée de stations de base et de mobiles (par exemple dans un outil de simulation).

Ainsi, le document de brevet WO 01 47146 décrit un procédé de contrôle, pour un réseau de communication radio-mobile, qui comprend la transmission de données d'une station mobile vers un réseau radio, lors de la connexion d'un utilisateur, la détection d'un niveau de puissance de transmission de la station mobile, et la transmission d'informations relatives au niveau de puissance détecté vers le réseau radio pour des opérations de contrôle de charge du réseau. L'indicateur de charge de ce document dépend donc de la puissance de transmission des mobiles. En outre, ce document ne considère pas le problème de la faisabilité de l'allocation de puissance à tous les mobiles.

Dans un autre type d'algorithmes, dits "à essai", un nouveau mobile est admis temporairement avant qu'une décision ne soit prise. Ceci est décrit dans:

[2] Zvi Rosberg, Michael Andersin and Jens Zander, "Soft and safe admission control in cellular networks", IEEE Transaction on Networking 5(2):414-418, April 1997.

[3] N. Bambos, S.C. Chen, and G.J. Pottie. "Channel access algorithms with active link protection for wireless communication networks with power control", IEEE/ACM Transactions in Networking 8(5):583 -596, October 2000.

Les algorithmes "à essai "ont l'avantage d'être sûrs, en ce sens qu'aucune coupure ne se produira, du moins jusqu'à l'instant de la décision. En revanche, leur exécution demande tellement de temps qu 'ils ne sont pas utilisable dans la pratique, tout particulièrement dans les systèmes réels.

A été également proposé un algorithme de contrôle d'admission pour le sens montant basé sur le concept de bande efficace, inspiré du réseau à bande large RNIS (Réseau Numérique à Intégration de Services), utilisant l'ATM (Asynchronous Transfer Mode) :

[4] J.S. Evans and D. Everitt. "Effective bandwidth-based admission control for multiservice CDMA cellular networks", IEEE Transactions on Vehicular Technology 48, January 1999.

Cet algorithme de contrôle d'admission basé sur la bande efficace concerne seulement le sens montant; il ne tient compte ni des limitations de puissance ni du bruit ; enfin, il est centralisé, c'est-à-dire qu'il n'est pas possible de traiter chaque station indépendamment des autres.

La présente invention vient traiter le contrôle d'admission et de congestion d'une manière nouvelle, pour le sens montant, c'est-à-dire depuis un mobile vers une station.

La présente invention a plusieurs aspects, qui peuvent être pris indépendamment.

On parlera de critère PAP global lorsque ce critère doit s'appliquer sur un ensemble de stations du réseau, et de critère PAP décentralisé lorsque ce critère peut s'appliquer sur une seule station de base.

L'invention propose d'abord un critère PAP décentralisé pour le sens montant, noté UPAP (de "Uplink Power Allocation Principle"). Ce critère peut être utilisé comme condition pour la faisabilité du contrôle de puissance dans le sens montant, sans considération de limitation de puissance.

Pour prendre en compte la limitation de puissance, l'invention propose un critère noté EUPAP (principe étendu d'allocation de puissance décentralisé pour le sens montant, soit "Extended Uplink Power Allocation Principle").

L'invention propose aussi des mécanismes ou algorithmes de contrôle d'admission et de congestion décentralisés basés sur UPAP et EUPAP.

On examine d'abord le sens montant en mode "sans limitation de puissance".

On peut considérer que le contrôle de puissance dans le sens montant sans limitation de puissance est faisable si, pour tous les mobiles $m_u$, il existe des puissances toutes non négatives $P_{mu}$ qui satisfont la condition A.1. Cette condition exprime que, pour chaque mobile, le rapport-signal-sur-interférence-et-bruit (SINR) est supérieur à un seuil donné, propre à ce mobile.

Le critère d'allocation de puissance décentralisé pour le sens montant (UPAP) peut alors être considéré. Son expression par la condition A.2 annexée utilise le SNIR modifié, également défini en annexe. La signification est la suivante :

Si pour chaque station u, la condition A.2 est vérifiée, alors le contrôle de puissance dans le sens montant sans limitation de puissance est faisable. Le coefficient k dans l'équation A.2 représente une marge de sécurité qui fixe le seuil au dessous de 1.

On examine maintenant le cas du sens montant en mode "avec limitation de puissance".

On peut considérer que le contrôle de puissance dans le sens montant avec limitation de puissance est faisable si des puissances non négatives $P_{mu}$ existent pour tous les mobiles $m_u$, pour lesquels, à la fois :

- la condition A.1 est satisfaite, et
- la puissance émise par chaque mobile ne dépasse pas la limite donnée, comme exprimé dans la relation A.3. Cette limite correspond à la puissance maximale du mobile pouvant prendre en compte le gain et la perte d'antenne.

Le critère EUPAP peut alors être exprimé. On fixe une constante θ comprise entre 0 inclus et 1 exclu, appelée seuil UBC pour le bilan de liaison montant (Uplink Budget Condition), également désignée par "seuil-bilan".

Si les deux conditions A.4 et A.5 sont satisfaites, alors, avec une grande probabilité, le contrôle de puissance dans le sens montant avec limitation de puissance est faisable.

Ces nouveaux procédés de contrôle de charge ont les avantages suivants:

1. le traitement est décentralisé, en ce sens qu'il porte à chaque fois sur une population des mobiles servis par une station, individuellement.

2. les indicateurs de charge utilisés dépendent seulement des affaiblissements entre les mobiles et les stations, des seuils de SINR et des limites de puissance.

3. ces indicateurs ne dépendent pas des puissances de transmission, et par conséquent ils ne fluctuent pas en raison des itérations effectuées lors du calcul de ces puissances.

4. La charge additionnelle induite par un nouveau mobile peut être calculée avec précision.

5. Les nouveaux algorithmes de contrôle de la charge ont les avantages des algorithmes directs et "à essai "et évitent leurs inconvénients. Ils sont simultanément rapides et sûrs.

L'homme du métier sait déjà mesurer les affaiblissements entre un mobile et plusieurs stations. Considérant par exemple le système UMTS, la norme prévoit de mesurer les affaiblissements entre un mobile et 32 stations. Ainsi, les paramètres requis pour construire un critère xPAP sont disponibles.

L'application de l'invention en simulation peut se faire dans un ordinateur de capacité adéquate.

L'application de l'invention dans de vrais systèmes peut se faire en prévoyant un dispositif de contrôle, mettant en oeuvre au moins partiellement les algorithmes proposés. Ce dispositif de contrôle peut être implanté au niveau du calculateur d'une station de base (appelée Node-B dans UMTS) et/ou au niveau du calculateur situé dans le contrôleur de station de base (appelé RNC dans UMTS). Il peut aussi, par exemple, être réparti entre ces deux éléments.

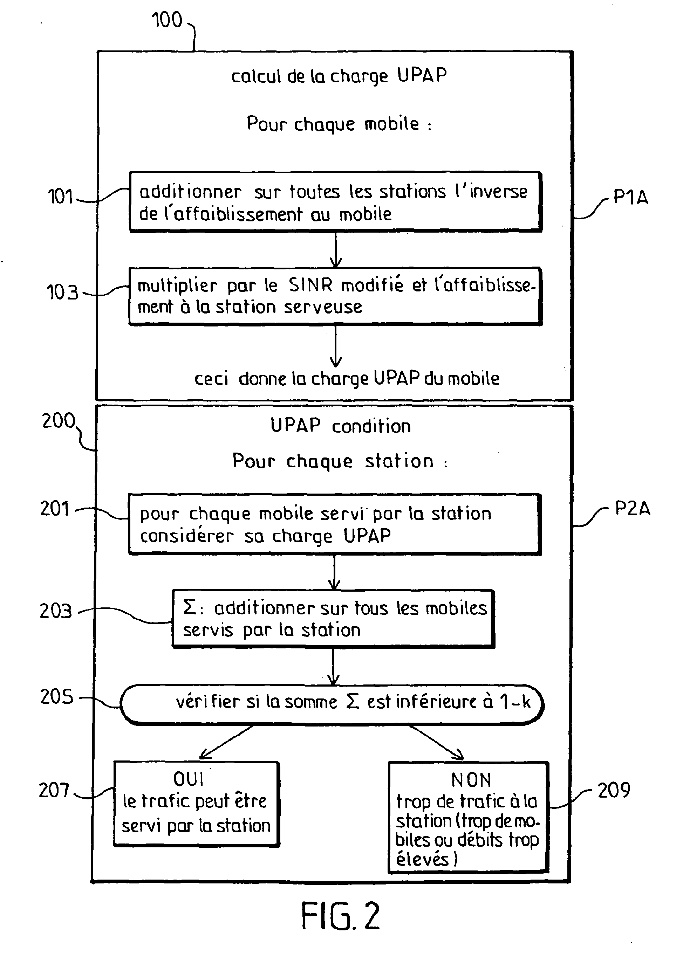

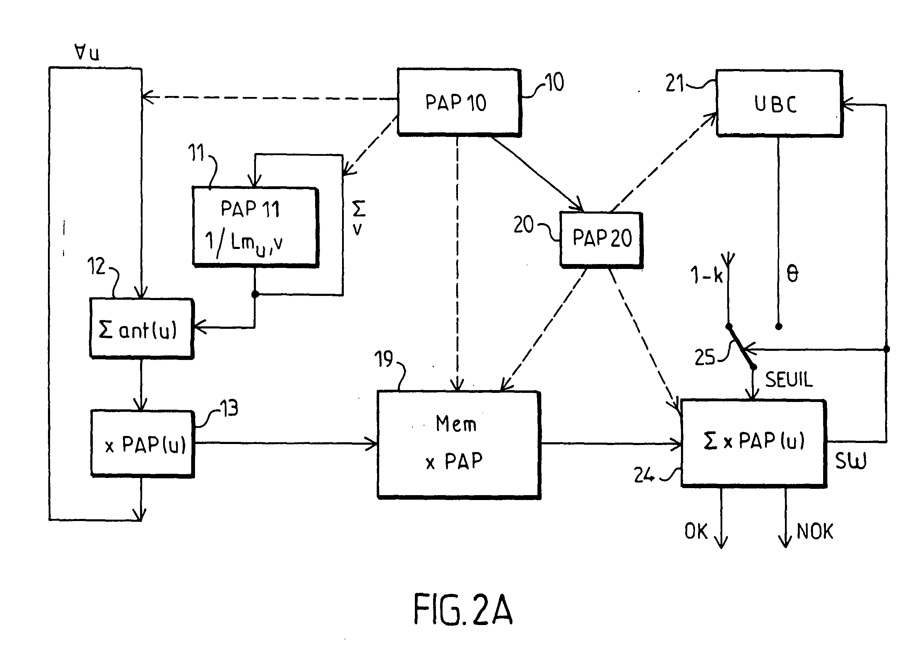

Sur la figure 2, le bloc 100 ou P1A assure le calcul de la charge xPAP, ici UPAP, pour chaque mobile. Le bloc 200 ou P2A assure la sommation des charges des mobiles individuellement servis par une station donnée (u), aux fins de déterminer la condition de faisabilité xPAP, ici UPAP.

Le bloc 100 réalise ici deux opérations:

- une opération 101 qui consiste à additionner sur toutes les stations l'inverse de l'affaiblissement au mobile $L_{mu,v}$
- une opération 103 qui consiste à multiplier le résultat de l'opération 101 par le SINR modifié, ainsi que l'affaiblissement à la station serveuse $L_{mu,u}$-(en indice, "mu" correspond à "$m_u$" dans les formules annexées). Le résultat est la charge UPAP du mobile (équipement utilisateur).

On comprend que ce bloc P1A réalise l'intégralité des opérations du premier membre de l'équation A.2 annexé, à l'exception de la sommation qui figure en tête de cette équation A.2.

Cette sommation de tête est effectuée dans le bloc 200 ou P2A, qui réalise les opérations suivantes:

- en 201, pour chaque mobile servi par la station considérée, on accède à sa charge UPAP, au besoin convenablement mémorisée entre temps.
- l'étape 203 consiste alors à sommer cette charge UPAP pour tous les mobiles servis par la station u considérée. La somme ainsi obtenue est notée en abrégé $\Sigma$.
- l'étape 205 vérifie si la somme obtenue $\Sigma$ est inférieure à un seuil.

Dans le mode de calcul donné à titre d'exemple, les charges xPAP (et autres) sont sans dimension. On peut donc fixer le seuil à 1, ou à 1 - k, où k est une marge de sécurité convenablement choisie, comme indiqué dans l'équation A.2.

Si la somme $\Sigma$ est inférieure au seuil 1 - k, l'opération 207 indique que le trafic peut être servi par la station u considérée. Dans le cas contraire, l'opération 209 indique qu'il y a trop de trafic à la station: par exemple, ou bien celle-ci dessert trop de mobiles, ou bien les mobiles, ou certains d'entre eux, sont desservis avec des débits trop élevés.

Le processus d'UPAP, présenté sur la figure 2, est un exemple de mise en oeuvre de l'invention pour assurer la faisabilité de l'allocation de puissance dans le sens montant sans limitation de puissance.

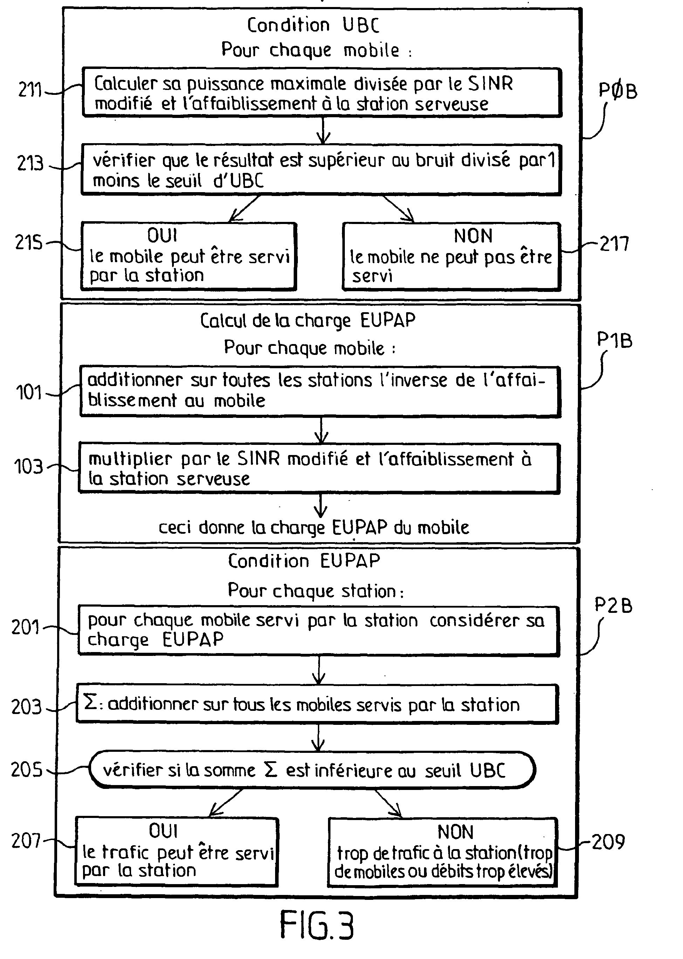

La figure 2A est une vue par modules concrets du mécanisme illustré sur la figure 2. On verra qu'elle montre les similitudes avec le processus de la Figure 3.

Le module de calcul PAP11 est capable de réaliser le calcul d'inverse prévu à l'opération 101, pour une station v.

Comme l'indique la boucle figurant sur la figure 2A, ceci est réitéré pour toutes les stations v considérées pour le mobile concerné. La somme qui en résulte est mémorisée dans le bloc 12.

Ceci est contrôlé par un premier gestionnaire de calcul PAP 10. Celui-ci assure le contrôle de l'ensemble du calcul effectué en P1A (figure 2), comme indiqué par des flèches en trait tireté sur la figure 2A.

Globalement, ceci est répété pour tous les mobiles, comme l'indique la boucle qui opère entre le bloc 12 et le bloc 13. Ce dernier fournit donc séquentiellement les différentes charges UPAP pour les mobiles considérés de la station u. Les valeurs ainsi obtenues peuvent être mises en mémoire en 19.

Le premier gestionnaire de calcul PAP 10 passe alors le contrôle à un second gestionnaire de calcul PAP 20, qui peut réaliser le mécanisme P2A.

Il le fait, dans l'exemple, en coopération avec la mémoire 19, et avec la cellule PAP24. Elle réalise les deux premières opérations 201 et 203 de la figure 2. Ceci se traduit par une somme $\Sigma xPaP(u)$, qui correspond à une sommation sur tous les usagers desservis par une station donnée u. Le bloc 24 réalise une comparaison de cette somme à un seuil qu'il reçoit sur une entrée 25. Le but est de déterminer si on est dans la situation de l'opération 207 ou 209 de la figure 2, c'est-à-dire si le trafic peut ou non être servi par la station u.

Dans le cas du mode sans limitation de puissance, ou UPAP, le seuil est à une valeur égale ou légèrement inférieure à 1, soit 1- k, conformément à l'équation A.2.

On considère maintenant le cas avec limitation de puissance. Au niveau de l'unité 24 de la figure 2A ceci peut se traduire par:

- le basculement de l'interrupteur 25, qui va maintenant donner un seuil $\Theta$ à l'unité 24 (au lieu de 1-k), et
- la mise en oeuvre d'une fonction de calcul UBC, référencée 21 sur la figure 2A.

Par souci de clarté, les calculs qui sont maintenant à effectuer sont dénommés EUPAP. Toutefois, et c'est l'un des avantages de l'invention, ils sont fondamentalement semblables à ceux qui ont été décrits en référence à la figure 2.

C'est ainsi que la partie médiane P1B et la partie basse P2B de la figure 3 s'expriment par les mêmes fonctions que celles de la figure 2, et portent d'ailleurs la même référence. La seule différence est que le seuil intervenant à l'étape 205 est maintenant le seuil $\Theta$, également dit seuil UBC, au lieu du seuil 1-k de la Figure 2. En principe, le seuil $\Theta$ est inférieur au seuil 1-k. Il pourra rester proche de (1-k), par valeurs inférieures, pour un mobile proche de la station ; il diminue, lorsque le mobile s'éloigne de la station. Il s'agit ici, non de la proximité géographique, mais de la proximité électro-magnétique, compte-tenu des éventuels obstacles affaiblissant la propagation des ondes.

Préalablement au déroulement de ces opérations P1B et P2B de la figure 3, il est prévu de calculer une "condition UBC", dont le mécanisme est illustré en P0B sur la figure 3. Ce mécanisme comprend, pour chaque mobile:

- l'opération 211 qui consiste à calculer la puissance maximale allouée au mobile, divisée par le SINR modifié et l'affaiblissement à la station serveuse, et

- le test 213 qui vérifie que le résultat est supérieur au bruit N divisé par 1- Θ, où Θ est le seuil d'UBC.
- Si le test est positif, le mobile peut vraisemblablement être servi par la station, comme indiqué en 215 ; si au contraire le test est négatif, le mobile ne peut en principe pas être servi par la station, comme indiqué en 217.

Dans le cas 215 où le test a été positif, la suite prévoit que l'on refait les calculs illustrés en partie moyenne P1B et basse P2B de la figure 3, mais cette fois en utilisant le seuil UBC noté Θ à l'opération 205.

Le déroulement de ces opérations étant en principe les mêmes que pour la figure 2, il ne sera pas décrit à nouveau.

On aboutit finalement en 207 ou 209 à une conclusion que le trafic lié à l'ensemble des mobiles peut ou non être servi par la station u considérée.

Le module POB de la figure 3 réalise les calculs de l'équation A.4. Les modules P1B et P2B réalisent les calculs de l'équation A.5.

Le processus d'EUPAP présenté sur la figure 3 constitue un exemple de mise en oeuvre de l'invention pour assurer, avec une probabilité élevée, la faisabilité de l'allocation de puissance dans le sens montant avec des limitations de puissance.

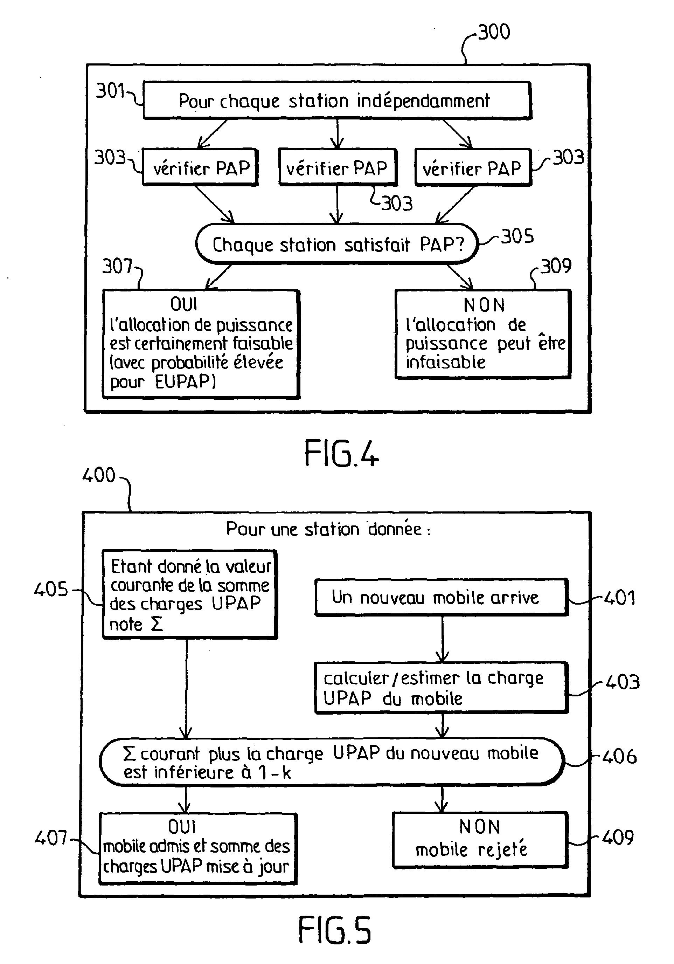

On vient maintenant faire référence à la figure 4, qui illustre le fait que les mécanismes proposés selon l'invention sont "décentralisés".

Sur la figure 4, l'abréviation PAP désigne indifféremment le calcul UPAP ou EUPAP (elle correspond au xPAP de la figure 2A). Pour les différentes stations indépendamment (301), on va procéder à des vérifications PAP (303). Si chaque station satisfait la condition PAP (305), alors l'allocation de puissance globale est certainement faisable (ou faisable avec une probabilité élevée s'il s'agit de EUPAP), comme indiqué en 307. Dans le cas contraire, il se peut que l'allocation de puissance soit infaisable, comme indiqué en 309.

Dans ce qui précède, la mise en oeuvre des mécanismes proposés se fait de manière absolue, c'est-à-dire en effectuant à nouveau tous les calculs à chaque fois, comme si on se trouvait à tout instant en présence d'une configuration mobiles/stations totalement nouvelle.

Bien entendu, il est possible en pratique de faire opérer les mêmes mécanismes de manière relative. On décrira maintenant l'exemple le plus simple, en référence à un nouveau mobile entrant dans une configuration réelle, déjà en service. En fait, il s'agit d'un nouveau mobile entrant pour une station donnée : soit ce nouveau mobile cherche une connexion, soit c'est un mobile connecté vers une autre station, et pour lequel un changement de station est envisagé.

La figure 5 illustre un exemple du contrôle d'admission dans le sens montant, sans limitation de puissance, c'est-à-dire de type UPAP.

Il existe dans la mémoire 19 de la figure 2A une valeur courante de la somme des charges UPAP actuelles. (Ceci suppose que l'on est actuellement en mode UPAP ; bien entendu, il s'agirait d'une valeur courante de la somme des charges EUPAP, si l'on était en mode avec limitation de puissance).

Lorsqu'un nouveau mobile arrive (401), l'opération 403 consiste à calculer ou estimer la charge UPAP de ce mobile, en utilisant la fonction de calcul P1A de la figure 2, ou bien, ce qui revient au même, les modules 11, ainsi que 12 et 13 de la figure 2A (mais une seule fois pour les modules 12 et 13, sans faire la boucle sur tous les mobiles).

L'opération 406 consiste alors à augmenter la valeur courante stockée en 405 de la charge UPAP du nouveau mobile, et à tester si le résultat demeure inférieur à 1-k. Si oui, le mobile est admis en 407, et la somme des charges UPAP est mise à jour dans la mémoire 19. Sinon, le mobile est rejeté en 409, au titre du mode sans limitation de puissance.

Les opérations de la figure 5 peuvent demeurer à effectuer sous le contrôle du gestionnaire 10 de la figure 2A, qui opère comme précédemment, sauf qu'il inhibe la boucle opérant sur les fonctions de calculs 12 et 13, comme déjà indiqué.

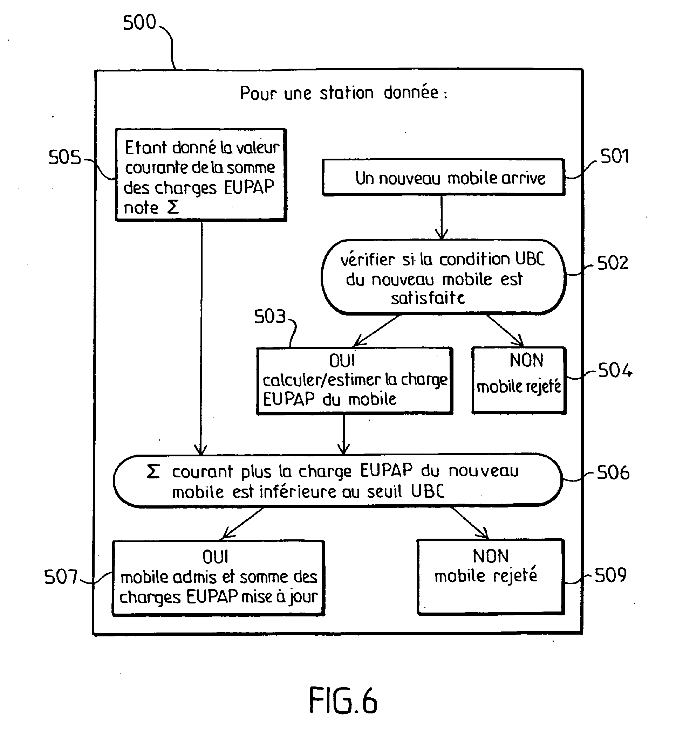

Le cas d'un contrôle d'admission dans le sens montant avec limitation de puissance, c'est-à-dire fondé sur EUPAP, est illustré sur la figure 6.

Le fonctionnement est, pour l'essentiel, le même que sur la figure 5. Les éléments qui se correspondent ont des références numériques augmentées de 100. Toutefois, avant de calculer ou d'estimer en 503 la charge EUPAP du mobile, on vérifie en 502 si la condition UBC est satisfaite pour le nouveau mobile. Si elle n'est pas satisfaite, ce mobile est immédiatement rejeté en 504. Sinon, on passe à l'opération 503, et ce n'est qu'à la fin, en 507 ou 509 que le mobile sera finalement admis, ou bien encore rejeté.

L'invention permet également, ou à part (cet aspect pourrait être séparé) de contrôler la congestion dans le sens montant.

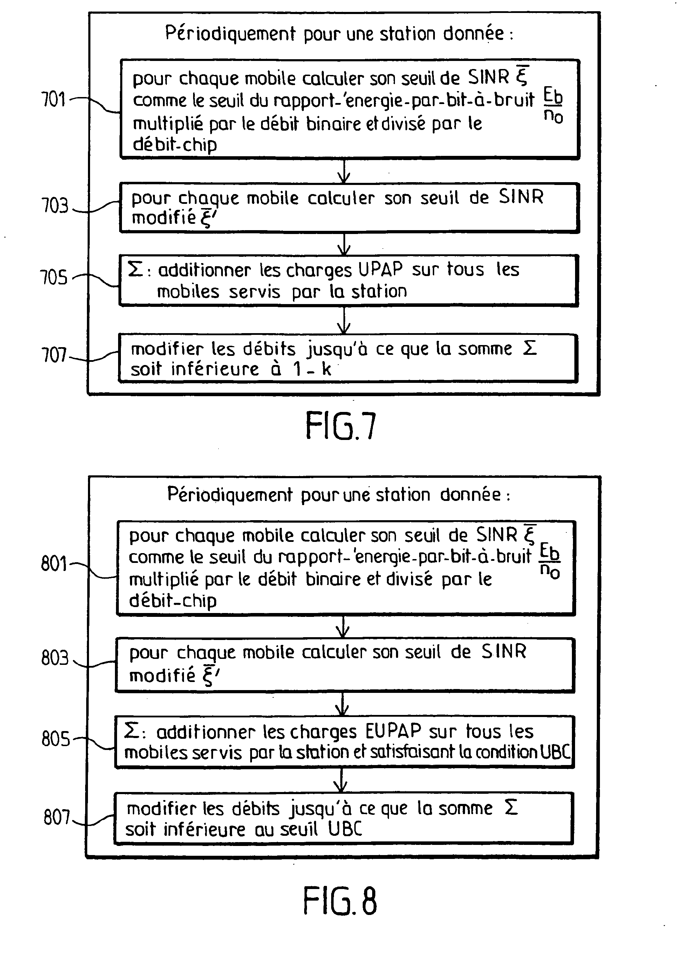

La figure 7 illustre un mécanisme de contrôle de congestion dans le sens montant basé sur UPAP.

Ce mécanisme est mis en oeuvre périodiquement, pour chaque station, une par une. Il se déroule comme suit:

- l'opération 701 consiste pour chaque mobile, à calculer son seuil de rapport signal à interférence et bruit. Ce seuil est défini comme le seuil du rapport énergie par bit à bruit Eb/n0, multiplié par le débit binaire (bit rate) $D_{bit}$, et divisé par le débit-chip $D_{chip}$. Le débit-chip définit un débit rapporté à la période d'une porteuse ou sous-porteuse utilisée pour l'étalement spectral.

- l'opération 703 consiste, pour chaque mobile de la station considérée à calculer le seuil de SINR modifié qui lui est propre, conformément à la notation figurant en annexe.

- ensuite, l'opération 705 consiste à additionner les charges UPAP sur tous les mobiles servis par la station. Les charges UPAP sont re-calculées à chaque passage à l'opération 105, du moins pour ceux des mobiles qui ont bougé.

- ensuite, à l'étape 707, on diminue les débits jusqu'à ce que la somme résultante de l'opération 705 soit inférieure à 1 - k, où k est une marge de sécurité par rapport à 1.

Cette marge de sécurité k peut être considérée comme liée à la mobilité des utilisateurs. Plus la mobilité des utilisateurs est réduite, plus cette marge est faible. Elle est nulle si tous les utilisateurs sont fixes. Elle peut être fixée à l'avance, par exemple en fonction d'une estimation, ou de statistiques sur cette mobilité, ou bien déterminée dynamiquement, de temps à autre.

La figure 8 illustre un algorithme de contrôle de congestion dans le sens montant, mais cette fois avec limitation de puissance, c'est-à-dire basé sur EUPAP.

Les opérations sont là aussi les mêmes que celles de la figure 7 (les références numériques sont augmentées de 100). La seule différence essentielle est qu'aux étapes 805 et 807, au lieu de prendre le seuil 1 - k, on prend le seuil UBC noté Θ, comme on l'on a déjà vu à propos de la figure 3.

Bien entendu, la présente invention n'est pas limitée au mode de réalisation décrit, notamment en détail et s'étend à toute variante mettant en oeuvre les principes exposés.

En particulier, il a été exposé une façon de mettre en oeuvre l'invention de manière dynamique, à parti de valeurs déjà calculées. D'autres modes de fonctionnement "incrémentiels" peuvent être envisagés.

Il est évident également, à la lecture de la description, que les processus de l'invention, ainsi que les dispositifs adaptés à leur mise en oeuvre, sont indépendants les uns des autres et peuvent faire l'objet d'une mise en oeuvre indépendante.

Ainsi, le processus d'allocation de puissance décentralisé pour le sens montant peut être basé sur UPAP ou sur EUPAP selon que cette allocation est ou non sans limitation de puissance. Il en va de même pour les processus indépendants de l'invention tels que

- les processus d'admission de mobile et
- les processus de contrôle de congestion,

basés sur UPAP ou sur EUPAP selon que cette allocation est ou non sans limitation de puissance.

**1 Annexe 1**

**1.1 Notations**

- *u, v* stations.
- $m_u$ un mobile servi par une station u.
- $L_{m,v}$ affaiblissement entre le mobile m et la station v.
- *N* bruit externe.

- $\bar{\xi}_{m_u}$ seuil du rapport-signal-sur-interférence-et-bruit (signal-to-interference-and-noise-ratio SINR) pour le mobile $m_u$.

- $\bar{\xi}'_{m_u} = \bar{\xi}_{m_u}/(1 + \bar{\xi}_{m_u})$ *SINR modifié.*

- $P_{m_v}$ puissance émise par le mobile $m_v$.

- $P_{m_u}$ la puissance maximale du mobile $m_u$.

- *k* marge de sécurité par rapport à 1.

**1.2 Equations**

$$\frac{P_{m_u}/L_{m_u,u}}{N + \sum_v \sum_{m_v \neq m_u} P_{m_v}/L_{m_v,u}} \geq \bar{\xi}_{m_u} \ , \ \forall \ u, m_u \qquad (A.1)$$

$$\sum_{m_u} \left( \sum_v 1/L_{m_u,v} \right) \bar{\xi}'_{m_u} L_{m_u,u} < 1 - k \qquad (A.2 - UPAP)$$

$$P_{m_u} \leq \bar{P}_{m_u} \ , \ \forall \ u, m_u \qquad (A.3)$$

$$\frac{\bar{P}_{m_u}}{\bar{\xi}'_{m_u} L_{m_u,u}} \geq \frac{N}{1 - \bar{\theta}} \ , \ \forall \ u, m_u \qquad (A.4 - UBC)$$

$$\sum_{m_u} \left( \sum_v 1/L_{m_u,v} \right) L_{m_u,u} \ \bar{\xi}'_{m_u} \leq \bar{\theta} \ , \ \forall \ u \qquad (A.5 - EUPAP)$$

**Revendications**

1. Dispositif de contrôle pour un réseau de communication sans fil constitué de stations de base communiquant avec des mobiles, le dispositif comprenant un calculateur de grandeurs qui sont fonction des affaiblissements mesurés entre mobiles et stations de base, et/ou du seuil du rapport signal sur interférence et bruit, et un organe de décision quant au traitement de nouveaux mobiles candidats, cet organe opérant conjointement avec le calculateur selon un mécanisme prédéfini, **caractérisé en ce que** ledit mécanisme comprend, pour une station de base donnée:

   - une fonction de calcul de charge (100) apte à calculer, pour chaque mobile servi par la station et pour chaque nouveau mobile candidat, la charge induite par ledit mobile en fonction des grandeurs fournies par le calculateur, et
   - une évaluation d'une condition de travail (205), représentant la faisabilité de l'allocation de puissances aux mobiles par ladite station (207), à partir des charges calculées.

2. Dispositif selon la revendication 1, **caractérisé en ce que** le mécanisme est capable de calculer la somme des charges des mobiles servis par la station (203), la charge de chaque mobile étant calculée par la fonction de calcul de charge, et **en ce que** la condition de travail porte sur ladite somme de charges (205).

3. Dispositif selon l'une des revendications 1 et 2, **caractérisé en ce que** la fonction de calcul de charge comporte, pour un mobile, la sommation des inverses des affaiblissements des stations voisines (101), le résultat étant multiplié par une expression reliée au seuil du rapport signal sur interférence et bruit, et par l'affaiblissement à la station serveuse (103).

4. Dispositif selon l'une des revendications 2 et 3, **caractérisé en ce qu'**il comprend un stockage (405) d'une valeur en cours de la somme des charges, et **en ce que** ledit mécanisme opère incrémentiellement en calculant la charge d'un mobile candidat (403), en mettant à jour la somme des charges par ajout de la charge du mobile candidat à la valeur stockée (406), et en évaluant une condition de travail portant sur la somme des charges ainsi mise à jour pour déterminer si le mobile candidat est admis ou non (407, 409).

5. Dispositif selon l'une des revendications 1 à 4, **caractérisé en ce que** le calculateur est muni d'une fonction capable d'évaluer une condition préalable de bilan de liaison montante, par rapport à une valeur de seuil-bilan (213), et **en ce que** le mécanisme utilisé par l'organe de décision appelle d'abord ladite fonction d'évaluation de la condition préalable, et rejette le mobile candidat si cette condition n'est pas vérifiée (217).

**6.** Dispositif selon la revendication 5, **caractérisé en ce que** la condition préalable comporte, pour un mobile, le calcul de sa puissance maximale, divisée par une expression reliée au seuil du rapport signal sur interférence et bruit, et par l'affaiblissement entre le mobile et la station serveuse (211).

**7.** Dispositif selon l'une des revendications 5 et 6, **caractérisé en ce que** la condition de travail est définie par rapport à une valeur de seuil, établie en correspondance avec la valeur de seuil-bilan de la condition préalable.

**8.** Dispositif selon l'une des revendications précédentes, **caractérisé en ce qu'**il comprend un second mécanisme capable de coopérer avec le calculateur pour évaluer, pour une station donnée, un critère de non-congestion (705,805), et un second organe de décision, capable de modifier les débits-mobiles pour rester dans le champ du critère de congestion (707,807).

**9.** Dispositif selon la revendication 8, **caractérisé en ce que** le second mécanisme comprend le calcul de son seuil de rapport signal sur interférence et bruit (701), puis le calcul de l'expression reliée à ce seuil de rapport signal sur interférence et bruit (703), et ensuite l'évaluation de la condition de travail pour tous les mobiles servis par la station (705).

**10.** Dispositif selon la revendication 8, prise en combinaison avec la revendication 5, **caractérisé en ce que** le second mécanisme comporte, pour chaque mobile, le calcul de son seuil de rapport signal sur interférence et bruit (801), puis le calcul d'une expression reliée à ce seuil de rapport signal sur interférence et bruit (803), et ensuite:

- l'appel de la fonction capable d'évaluer la condition préalable de bilan de liaison montante, par rapport à la valeur de seuil-bilan, le mobile concerné étant rejeté si cette condition préalable n'est pas vérifiée, et
- l'évaluation de la condition de travail pour les mobiles non rejetés (805).

**11.** Procédé de contrôle pour un réseau de communication sans fil constitué de stations de base communiquant avec des mobiles, le procédé comprenant les étapes consistant, pour une station de base donnée, à :

a. calculer la charge (100) induite par chaque mobile servi par la station et par chaque nouveau mobile candidat, à partir de grandeurs qui sont fonction des affaiblissements mesurés entre mobiles et stations de base, et/ou du seuil du rapport signal sur interférence et bruit,
b. à partir des charges calculées de l'étape a., évaluer une condition de travail, représentant la faisabilité de l'allocation de puissance aux mobiles par ladite station (205),
c. décider du traitement de nouveaux mobiles candidats à partir de l'étape b (207).

**12.** Procédé selon la revendication 11, **caractérisé en ce que** l'étape b. comporte le calcul de la somme des charges obtenues à l'étape a. (203), et **en ce que** la condition de travail de l'étape b. porte sur ladite somme de charges.

**13.** Procédé selon l'une des revendications 11 et 12, **caractérisé en ce que** l'étape a. comprend, pour un mobile, de

- sommer les inverses des affaiblissements des stations voisines (101),
- multiplier le résultat par une expression reliée au seuil du rapport signal sur interférence et bruit, et par l'affaiblissement à la station serveuse (103).

**14.** Procédé selon l'une des revendications 12 et 13, **caractérisé en ce que** l'étape b. comprend un stockage d'une valeur en cours de la somme des charges obtenues à l'étape

a. (405), et lors d'une nouvelle itération du procédé pour un mobile candidat:

- à l'étape a., calculer la charge du mobile candidat,
- mettre à jour la somme des charges par ajout de la charge du mobile candidat à la valeur stockée (406), et
- évaluer à l'étape b. une condition de travail portant sur la somme des charges ainsi mise à jour pour déterminer si le mobile candidat est admis ou non à l'étape c (407, 409).

**15.** Procédé selon l'une des revendications 11 à 14, **caractérisé en ce que** l'étape a. comprend d'abord d'évaluer une condition préalable de bilan de liaison montante, par rapport à une valeur de seuil-bilan, et de rejeter le mobile candidat si cette condition n'est pas vérifiée (217).

**16.** Procédé selon la revendication 15, **caractérisé en ce que** la condition préalable de l'étape a. comporte, pour un mobile, le calcul de sa puissance maximale, divisée par une expression reliée au rapport signal sur interférence et bruit, et par l'affaiblissement entre le mobile et la station serveuse (211).

**17.** Procédé selon l'une des revendications 15 et 16, **caractérisé en ce que** la condition de travail de l'étape b. est définie par rapport à une valeur de seuil, établie en correspondance avec ladite valeur de seuil-bilan de la condition préalable.

**18.** Procédé selon l'une des revendications précédentes, **caractérisé en ce qu'**il comprend d'évaluer, pour une station donnée, un critère de non-congestion (705, 805), et **en ce que** l'étape c. comprend de modifier les débits-mobiles pour rester dans le champ du critère de congestion (707,807).

**19.** Procédé selon la revendication 18, **caractérisé en ce que** l'étape d'évaluation du critère de congestion comprend les étapes suivantes :

- calculer le seuil de rapport signal sur interférence et bruit, puis calculer une expression reliée à ce seuil de rapport signal sur interférence et bruit (701, 703), et
- évaluer la condition de travail pour tous les mobiles servis par la station (705).

**20.** Procédé selon la revendication 18, prise en combinaison avec la revendication 15, **caractérisé en ce que** l'étape d'évaluation du critère de congestion comprend les étapes suivantes :

- calculer le seuil de rapport signal sur interférence et bruit, puis calculer une expression reliée à ce seuil de rapport signal sur interférence et bruit (801, 803), et
- évaluer la condition préalable de bilan de liaison montante, par rapport à la valeur de seuil-bilan , le mobile concerné étant rejeté si cette condition préalable n'est pas vérifiée, et
- évaluer la condition de travail de l'étape b. pour les mobiles non rejetés (805).

**Claims**

**1.** Control apparatus for a wireless communication network consisting of base stations communicating with mobiles, the apparatus comprising a calculator for calculating variables which are a function of the attenuations measured between mobiles and base stations, and/or the threshold of the signal-to-interference-and-noise ratio, and a device for deciding as to the treatment of new candidate mobiles, this device working in conjunction with the calculator according to a predefined mechanism, **characterised in that** said mechanism comprises, for a given base station:

- a load calculating function (100) adapted to calculate, for each mobile served by the station and for each new candidate mobile, the load induced by said mobile as a function of the variables supplied by the calculator, and
- an evaluation of a working condition (205), representing the feasibility of the allocation of power to the mobiles by said station (207), based on the loads calculated.

**2.** Apparatus according to claim 1, **characterised in that** the mechanism is capable of calculating the sum of the loads of the mobiles served by the station (203), the load of each mobile being calculated by the load calculating function, and **in that** the working condition relates to said load total (205).

**3.** Apparatus according to one of claims 1 and 2, **characterised in that** the load calculating function comprises, for a mobile, the totalling of the inverses of the attenuations of the neighbouring stations (101), the result being multiplied by a term linked to the threshold of the signal-to-interference-and-noise ratio and by the attenuation at the server station (103).

**4.** Apparatus according to one of claims 2 and 3, **characterised in that** it comprises storing (405) a current value of the total load, and **in that** said mechanism operates incrementally by calculating the load of a candidate mobile (403), updating the total load by adding the load of the candidate mobile to the stored value (406), and by evaluating a working condition relating to the total load thus updated in order to determine whether or not the candidate mobile is admitted (407, 409).

5. Apparatus according to one of claims 1 to 4, **characterised in that** the calculator is equipped with a function capable of evaluating a prior uplink balance condition, compared with a threshold balance value (213), and **in that** the mechanism used by the deciding device first of all calls up said function for evaluating the prior condition, and rejects the candidate mobile if this condition is not verified (217).

6. Apparatus according to claim 5, **characterised in that** the prior condition comprises, for a mobile, a calculation of its maximum power, divided by a term linked to the threshold of the signal-to-interference-and-noise ratio, and by the attenuation between the mobile and the server station (211).

7. Apparatus according to one of claims 5 and 6, **characterised in that** the working condition is defined in relation to a threshold value set up in accordance with the threshold balance value of the prior condition.

8. Apparatus according to one of the preceding claims, **characterised in that** it comprises a second mechanism capable of cooperating with the calculator to evaluate, for a given station, a non-congestion criterion (705, 805), and a second decision means, capable of modifying the mobile rates so as to remain within the scope of the congestion criterion (707, 807).

9. Apparatus according to claim 8, **characterised in that** the second mechanism comprises a calculation of its signal-to-interference-and-noise ratio threshold (701), then a calculation of the term linked to this signal-to-interference-and-noise ratio threshold (703), followed by an evaluation of the working condition for all the mobiles served by the station (705).

10. Apparatus according to claim 8, taken in conjunction with claim 5, **characterised in that** the second mechanism comprises, for each mobile, calculating its signal-to-interference-and-noise ratio threshold (801), then calculating a term linked to this signal-to-interference-and-noise ratio threshold (803), and then:

   - calling up the function capable of evaluating the prior uplink balance condition, in relation to the threshold balance value, the mobile in question being rejected if this prior condition is not verified, and
   - evaluating the working condition for the non-rejected mobiles (805).

11. Method of control for a wireless communication network consisting of base stations communicating with mobiles, the method including steps which comprise, for a given base station:

   a. calculating the load (100) induced by each mobile served by the station and by each new candidate mobile, on the basis of variables which are a function of the attenuations measured between mobiles and base stations, and/or the threshold of the signal-to-interference-and-noise ratio,
   b. from the loads calculated in step a., evaluating a working condition, representing the feasibility of the allocation of power to the mobiles by said station (205),
   c. deciding on the treatment of new candidate mobiles on the basis of step b (207).

12. Method according to claim 11, **characterised in that** step b. comprises calculating the total of the loads obtained in step a. (203) and **in that** the working condition of step b. relates to said load total.

13. Method according to one of claims 11 and 12, **characterised in that** step a. comprises, for a mobile,

   - totalling the inverses of the attenuations of the neighbouring stations (101),
   - multiplying the result by a term linked to the threshold of the signal-to-interference-and-noise ratio, and by the attenuation at the server station (103).

14. Method according to one of claims 12 and 13, **characterised in that** step b. comprises storing a current value of the total of the loads obtained in step a. (405) and, when the method is repeated afresh for a candidate mobile:

   - in step a., calculating the load of the candidate mobile,
   - updating the load total by adding the load of the candidate mobile to the stored value (406), and
   - evaluating in step b. a working condition relating to the load total thus updated to determine whether or not the candidate mobile is admitted at step c(407, 409).

15. Method according to one of claims 11 to 14, **characterised in that** step a. comprises first of all evaluating a prior uplink balance condition, in relation to a threshold balance condition, and rejecting the candidate mobile if this condition is not verified (217).

16. Method according to claim 15, **characterised in that** the prior condition of step

a. comprises, for a mobile, calculating its maximum power, divided by a term linked to the signal-to-interference-and-noise ratio, and by the attenuation between the mobile and the server station (211).

17. Method according to one of claims 15 and 16, **characterised in that** the working condition in step b. is defined in relation to a threshold value, established in accordance with said threshold balance value of the prior condition.

18. Method according to one of the preceding claims, **characterised in that** it comprises evaluating, for a given station, a non-congestion criterion (705, 805), and **in that** step c. comprises modifying the mobile flow rates so as to remain within the scope of the congestion criterion (707, 807).

19. Method according to claim 18, **characterised in that** the step of evaluating the congestion criterion comprises the following steps:

- calculating the threshold of the signal-to-interference-and-noise ratio, then calculating a term linked to this threshold of the signal-to-interference-and-noise ratio (701, 703), and
- evaluating the working condition for all the mobiles served by the station (705).

20. Method according to claim 18, taken in conjunction with claim 15, **characterised in that** the step of evaluating the congestion criterion comprises the following steps:

- calculating the signal-to-interference-and-noise ratio threshold, then calculating a term linked to this signal-to-interference-and-noise ratio threshold (801, 803), and
- evaluating the prior uplink balance condition, in relation to the threshold balance value, the mobile in question being rejected if this prior condition is not verified, and
- evaluating the working condition of step b. for the non-rejected mobiles (805).

**Patentansprüche**

1. Steuerungsvorrichtung für ein drahtloses Kommunikationsnetz, gebildet durch mit Mobilgeräten kommunizierende Basisstationen, wobei die Vorrichtung eine Berechnungseinrichtung der Größen umfasst, die eine Funktion der zwischen Mobilgeräten und Basisstationen gemessenen Dämpfungen und/oder des Schwellenwerts des Signal-zu-Interferenz-und-Geräusch-Verhältnises sind, und ein Entscheidungsorgan bezüglich der Bearbeitung neuer Mobilgerätekandidaten umfasst, wobei dieses Organ mit dem Rechner gemäß einem vorher definierten Mechanismus zusammenarbeitet,
**dadurch gekennzeichnet, dass** der genannte Mechanismus für eine bestimmte Basisstation umfasst:

- eine Belastungsberechnungsfunktion (100), fähig - für jedes durch die Basisstation bediente Mobilgerät und für jeden neuen Mobilgerätekandidaten - die durch das genannte Mobilgerät induzierte Belastung in Abhängigkeit von den durch den Rechner gelieferten Größen zu berechnen, und
- eine Evaluierung einer Arbeitungsbedingung (205), welche die Machbarkeit der den Mobilgeräten durch die genannte Station (207) aufgrund der berechneten Belastungen zuzuteilenden Leistungen darstellt.

2. Vorrichtung nach Anspruch 1, **dadurch gekennzeichnet, dass** der Mechanismus fähig ist, die Summe der Belastungen der durch die Station (203) bedienten Mobilgeräte zu berechnen, wobei die Belastung jedes Mobilgeräts durch die Belastungsberechnungsfunktion berechnet wird, und **dadurch**, dass die Arbeitsbedingung sich auf die genannte Belastungssumme bezieht (205).

3. Vorrichtung nach einem der Ansprüche 1 und 2, **dadurch gekennzeichnet, dass** die Belastungsberechnungsfunktion für ein Mobilgerät die Summierung der Kehrwerte der Dämpfungen der benachbarten Stationen (101) umfasst, wobei das Resultat mit einem mit dem Schwellenwert des Signal-zu-Interferenz-und-Geräusch-Verhältnisses verbundenen Ausdruck und mit der Dämpfung in der bedienenden Station multipliziert wird (103).

4. Vorrichtung nach einem der Ansprüche 2 und 3, **dadurch gekennzeichnet, dass** es eine Speicherung eines laufenden Werts der Summe der Belastungen umfasst (405), und **dadurch**, dass der genannte Mechanismus inkrementell arbeitet, indem er die Belastung eines Mobilgerätekandidaten (403) berechnet, indem er die Summe der Belastungen durch Hinzufügen der Belastung des Mobilgerätekandidaten zu dem gespeicherten Wert aktualisiert (406) und indem er eine Arbeitsbedingung evaluiert, die sich auf die derart aktualisierte Belastungssumme bezieht, um zu bestimmen, ob der Mobilgerätkandidat zugelassen wird oder nicht (407, 409).

5. Vorrichtung nach einem der Ansprüche 1 bis 4, **dadurch gekennzeichnet, dass** eine Funktion des Rechners fähig ist, eine Vorausbedingung einer Uplink-Bilanz in Bezug auf einen Bilanzschwellenwert zu evaluieren (213), und **dadurch**, dass der durch das Entscheidungsorgan benutzte Mechanismus zuerst die genannte Evaluierungsfunktion der Vorausbedingung aufruft und den Mobilgerätekandidaten zurückweist, wenn diese Kondition nicht verifiziert wird (217).

6. Vorrichtung nach Anspruch 5, **dadurch gekennzeichnet, dass** die Vorausbedingung für ein Mobilgerät die Berechnung seiner maximalen Leistung umfasst, geteilt durch einen Ausdruck, der verbunden ist mit dem Schwellenwert des Signal-zu-Interferenz-und-Geräusch-Verhältnises, und durch die Dämpfung zwischen dem Mobilgerät und der bedienenden Station (211).

7. Vorrichtung nach einem der Ansprüche 5 und 6, **dadurch gekennzeichnet, dass** die Arbeitsbedingung in Bezug auf einen Schwellenwert definiert wird, erstellt in Übereinstimmung mit dem Bilanzschwellenwert der Vorausbedingung.

8. Vorrichtung nach einem der vorangehenden Ansprüche, **dadurch gekennzeichnet, dass** sie einen zweiten Mechanismus umfasst, fähig mit dem Rechner zu kooperieren, um für eine bestimmte Station ein Nicht-Überlastungskriterium zu evaluieren (705, 805), sowie ein zweites Entscheidungsorgan, fähig die Mobilgeräte-Datenraten zu modifizieren, um im Bereich des Überlastungskriteriums zu bleiben (707,807).

9. Vorrichtung nach Anspruch 8, **dadurch gekennzeichnet, dass** der zweite Mechanismus umfasst: die Berechnung ihres Signal-zu-Interferenz-und-Geräusch-Verhältnis-Schwellenwerts (701), dann die Berechnung des mit diesem Signal-zu-Interferenz-und-Geräusch-Verhältnis-Schwellenwert verbundenen Ausdrucks (703), und anschließend die Evaluierung der Arbeitsbedingung für alle durch die Station bedienten Mobilgeräte (705).

10. Vorrichtung nach Anspruch 8 in Verbindung mit Anspruch 5, **dadurch gekennzeichnet, dass** der zweite Mechanismus für jedes Mobilgerät umfasst: die Berechnung seines Signal-zu-Interferenz-und-Geräusch-Verhältnis-Schwellenwerts (801), dann die Berechnung eines mit diesem Signal-zu-Interferenz-und-Geräusch-Verhältnis-Schwellenwert verbundenen Ausdrucks (803), und anschließend:

   - das Aufrufen der zur Evaluierung der Uplink-Vorausbedingung im Verhältnis zum Bilanzschwellenwert fähigen Funktion, wobei das betreffende Mobilgerät zurückgewiesen wird, wenn diese Vorausbedingung nicht verifiziert wird, und
   - die Evaluierung der Arbeitsbedingung für die nicht zurückgewiesenen Mobilgeräte (805).

11. Steuerungsverfahren für ein drahtloses Kommunikationsnetz, gebildet durch mit Mobilgeräten kommunizierende Basisstationen, wobei die Verfahrensschritte für eine bestimmte Basisstation darin bestehen:

   a. Berechnung (100) - für jedes durch die Basisstation bediente Mobilgerät und für jeden neuen Mobilgerätekandidaten - der durch jedes Mobilgerät induzierten Belastung aufgrund von Größen, die abhängig sind von den zwischen den Mobilgeräten und der Basisstationen gemessenen Dämpfungen und/oder dem Schwellenwert des Signal-zu-Interferenz-und-Geräusch-Verhältnises,
   b. Evaluierung - aufgrund der in Schritt a. berechneten Belastungen - einer Arbeitsbedingung, welche die Machbarkeit der den Mobilgeräten durch die genannte Station aufgrund der berechneten Belastungen zuzuteilenden Leistungen darstellt (205),
   c. Entscheidung bezüglich der Bearbeitung neuer Mobilgerätekandidaten ab Schritt b (207).

12. Verfahren nach Anspruch 11, **dadurch gekennzeichnet, dass** der Schritt b. die Berechnung der Summe der in Schritt a. erhaltenen Belastungen umfasst (203), und **dadurch**, dass die Arbeitsbedingung des Schritts b. sich auf die genannte Summe von Belastungen bezieht.

13. Verfahren nach einem der Ansprüche 11 und 12, **dadurch gekennzeichnet, dass** der Schritt a. für ein Mobilgerät umfasst:

    - die Kehrwerte der Dämpfungen der Nachbarstationen zu summieren (101),
    - das Resultat mit einem mit dem Signal-zu-Interferenz-und-Geräusch-Verhältnis-Schwellenwert verbundenen Ausdruck und mit der Dämpfung in der bedienenden Station zu multiplizieren (103).

14. Verfahren nach einem der Ansprüche 12 und 13, **dadurch gekennzeichnet, dass** der Schritt b. eine Speicherung eines laufenden Werts der Summe der in Schritt a. erhaltenen Belastungen umfasst (405), und bei einer neuen Iteration des Verfahrens für ein Kandidatenmobilgerät:

    - Berechnung der Belastung des Kandidatenmobilgeräts in Schritt a.,
    - Aktualisierung der Summe der Belastungen durch Hinzufügen der Belastung des Kandidatenmobilgeräts zu dem eingespeicherten Wert (406), und
    - Evaluierung - in Schritt b. - einer sich auf die derart aktualisierte Belastungssumme beziehenden Arbeitsbedingung, um zu bestimmen, ob das Kandidatenmobilgerät in Schritt c zurückgewiesen wird oder nicht (407, 409).

15. Verfahren nach einem der Ansprüche 11 bis 14, **dadurch gekennzeichnet, dass** der Schritt

    a. darin besteht, zuerst eine Vorausbedingung der Uplink-Bilanz in Bezug auf einen Bilanzschwellenwert zu evaluieren und den Mobilgerätekandidaten zurückzuweisen, wenn diese Kondition nicht verifiziert wird (217).

16. Verfahren nach Anspruch 15, **dadurch gekennzeichnet, dass** die Vorausbedingung des Schritts a. für ein Mobilgerät die Berechnung seiner maximalen Leistung umfasst, geteilt durch einen Ausdruck, der verbunden ist mit dem Schwellenwert des Signal-zu-Interferenz-und-Geräusch-Verhältnises, und durch die Dämpfung zwischen dem Mobilgerät und der bedienenden Station (211).

17. Verfahren nach einem der Ansprüche 15 und 16, **dadurch gekennzeichnet, dass** die Arbeitsbedingung des Schritts b. in Bezug auf einen Schwellenwert definiert wird, erstellt in Übereinstimmung mit dem Bilanzschwellenwert der Vorausbedingung.

18. Verfahren nach einem der vorangehenden Ansprüche, **dadurch gekennzeichnet, dass** es darin besteht, für eine bestimmte Station ein Nicht-Überlastungskriterium zu evaluieren (705, 805), und **dadurch**, dass in Schritt c. vorgesehen ist, die Mobilgeräte-Datenraten zu modifizieren, um im Bereich des Überlastungskriteriums zu bleiben (707,807).

19. Verfahren nach Anspruch 18, **dadurch gekennzeichnet, dass** der Schritt zur Evaluierung des Überlastungskriteriums die folgenden Schritte umfasst:

    - die Berechnung des Signal-zu-Interferenz-und-Geräusch-Verhältnis-Schwellenwerts (701), dann die Berechnung eines mit diesem Signal-zu-Interferenz-und-Geräusch-Verhältnis-Schwellenwert verbundenen Ausdrucks (703), und
    - die Evaluierung der Arbeitsbedingung für alle durch die Station bedienten Mobilgeräte (705).

20. Verfahren nach Anspruch 18 in Verbindung mit Anspruch 15, **dadurch gekennzeichnet, dass** der Schritt zur Evaluierung des Überlastungskriteriums die folgenden Schritte umfasst:

    - Berechnung des Signal-zu-Interferenz-und-Geräusch-Verhältnis-Schwellenwerts, dann die Berechnung eines mit diesem Signal-zu-Interferenz-und-Geräusch-Verhältnis-Schwellenwert verbundenen Ausdrucks (801, 803), und
    - Evaluierung der Uplink-Vorausbedingung im Verhältnis zum Bilanzschwellenwert, wobei das betreffende Mobilgerät zurückgewiesen wird, wenn diese Vorausbedingung nicht verifiziert wird, und
    - Evaluierung der Arbeitsbedingung des Schritts b. für die nicht zurückgewiesenen Mobilgeräte (805).

FIG.1

FIG.1A

100

**calcul de la charge UPAP**

Pour chaque mobile :

101 — additionner sur toutes les stations l'inverse de l'affaiblissement au mobile

P1A

103 — multiplier par le SINR modifié et l'affaiblissement à la station serveuse

ceci donne la charge UPAP du mobile

200

**UPAP condition**

Pour chaque station :

201 — pour chaque mobile servi par la station considérer sa charge UPAP

P2A

203 — $\Sigma$ : additionner sur tous les mobiles servis par la station

205 — vérifier si la somme $\Sigma$ est inférieure à $1-k$

207 — **OUI** le trafic peut être servi par la station

**NON** trop de trafic à la station (trop de mobiles ou débits trop élevés) — 209

## FIG. 2

FIG.2A

Condition UBC

Pour chaque mobile :

Calculer sa puissance maximale divisée par le SINR modifié et l'affaiblissement à la station serveuse

vérifier que le résultat est supérieur au bruit divisé par1 moins le seuil d'UBC

| OUI | NON |
|---|---|
| le mobile peut être servi par la station | le mobile ne peut pas être servi |

PØB

Calcul de la charge EUPAP

Pour chaque mobile :

additionner sur toutes les stations l'inverse de l'affaiblissement au mobile

multiplier par le SINR modifié et l'affaiblissement à la station serveuse

ceci donne la charge EUPAP du mobile

P1B

Condition EUPAP

Pour chaque station :

pour chaque mobile servi par la station considérer sa charge EUPAP

$\Sigma$ : additionner sur tous les mobiles servis par la station

vérifier si la somme $\Sigma$ est inférieure au seuil UBC

| OUI | NON |
|---|---|
| le trafic peut être servi par la station | trop de trafic à la station (trop de mobiles ou débits trop élevés) |

P2B

FIG.3

EP 1 473 955 B1

FIG.4

FIG.5

500

Pour une station donnée :

505 — Etant donné la valeur courante de la somme des charges EUPAP note Σ

501 — Un nouveau mobile arrive

502 — vérifier si la condition UBC du nouveau mobile est satisfaite

503 — OUI calculer/estimer la charge EUPAP du mobile

504 — NON mobile rejeté

506 — Σ courant plus la charge EUPAP du nouveau mobile est inférieure au seuil UBC

507 — OUI mobile admis et somme des charges EUPAP mise à jour

509 — NON mobile rejeté

FIG.6

Périodiquement pour une station donnée :

pour chaque mobile calculer son seuil de SINR $\overline{\xi}$ comme le seuil du rapport-'energie-par-bit-à-bruit $\frac{Eb}{n_0}$ multiplié par le débit binaire et divisé par le débit-chip

pour chaque mobile calculer son seuil de SINR modifié $\overline{\xi}'$

$\Sigma$ : additionner les charges UPAP sur tous les mobiles servis par la station

modifier les débits jusqu'à ce que la somme $\Sigma$ soit inférieure à $1 - k$

## FIG.7

Périodiquement pour une station donnée :

pour chaque mobile calculer son seuil de SINR $\overline{\xi}$ comme le seuil du rapport-'energie-par-bit-à-bruit $\frac{Eb}{n_0}$ multiplié par le débit binaire et divisé par le débit-chip

pour chaque mobile calculer son seuil de SINR modifié $\overline{\overline{\xi}}'$

$\Sigma$ : additionner les charges EUPAP sur tous les mobiles servis par la station et satisfaisant la condition UBC

modifier les débits jusqu'à ce que la somme $\Sigma$ soit inférieure au seuil UBC

## FIG.8

## RÉFÉRENCES CITÉES DANS LA DESCRIPTION

**Documents brevets cités dans la description**

- FR 2851401

- WO 0147146 A

**Littérature non-brevet citée dans la description**

- **Zvi Rosberg ; Michael Andersin ; Jens Zander.** Soft and safe admission control in cellular networks. *IEEE Transaction on Networking,* Avril 1997, vol. 5 (2), 414-418
- **N. Bambos ; S.C. Chen ; G.J. Pottie.** Channel access algorithms with active link protection for wireless communication networks with power control. *IEEE/ACM Transactions in Networking,* Octobre 2000, vol. 8 (5), 583-596

- **J.S. Evans ; D. Everitt.** Effective bandwidth-based admission control for multiservice CDMA cellular networks. *IEEE Transactions on Vehicular Technology,* Janvier 1999, vol. 48